**Europäisches Patentamt**

**European Patent Office**

**Office européen des brevets**

(19)

(11) Numéro de publication: **0 196 248**
**B1**

(12) **FASCICULE DE BREVET EUROPEEN**

(45) Date de publication du fascicule du brevet:
**03.08.88**

(51) Int. Cl.⁴: **B 60 D 1/22**

(21) Numéro de dépôt: **86400408.0**

(22) Date de dépôt: **26.02.86**

(54) Timon articulé d'attelage pour une remorque.

(30) Priorité: **01.03.85 FR 8503475**

(43) Date de publication de la demande:
**01.10.86 Bulletin 86/40**

(45) Mention de la délivrance du brevet:
**03.08.88 Bulletin 88/31**

(84) Etats contractants désignés:
**AT BE CH DE FR GB IT LI LU NL SE**

(56) Documents cités:
**FR - A - 2 178 497**
**FR - A - 2 335 363**
**FR - A - 2 342 179**
**GB - A - 602 486**
**US - A - 3 787 068**
**US - A - 4 313 616**

(73) Titulaire: **Woestelandt, Emile, 180 rue du Général de Gaulle, F-59370 Mons en Baroeul (FR)**

(72) Inventeur: **Woestelandt, Emile, 180 rue du Général de Gaulle, F-59370 Mons en Baroeul (FR)**

(74) Mandataire: **Ecrepont, Robert, CABINET ECREPONT ROBERT 12, Place Simon Vollant, F-59800 Lille (FR)**

## Description

L'invention concerne un timon articulé d'attelage pour une remorque, notamment mais non exclusivement une caravane, tractée par un véhicule.

Plus précisément, l'invention s'applique à un timon d'attelage pour une remorque, qui comprend au moins deux bras articulés, d'un côté à un organe solidaire au moins transversalement du véhicule ou solidarisable à celui-ci, et de l'autre à un organe solidaire de la remorque.

Un tel attelage comprenant deux bras articulés est notamment connu d'après le brevet FR-A-1 552 857.

On connaît également des attelages du même type, qui comprennent trois, et même quatre bras articulés de liaison entre la remorque et le véhicule.

D'une manière connue, ces bras de liaison articulés qui sont disposés selon les côtés d'un trapèze déformable, décalent d'une manière fictive le point d'articulation de la remorque par rapport au véhicule, et le reportent fictivement au voisinage du train arrière du véhicule.

Ceci améliore considérablement le comportement routier de la remorque et amortit ses mouvements de lacets, le cas échéant de tangage lorsque le timon présente plus de deux bras.

De tels attelages posent cependant un problème au niveau de la commande du dispositif de freinage propre de la remorque, qui est obligatoire au delà d'un poids en charge déterminé en particulier, lorsque le freinage est commandé par l'inertie de la remorque, c'est-à-dire par le rapprochement de la remorque et du véhicule.

Pour une remorque traditionnelle, l'organe télescopique qui commande le freinage de la remorque est situé dans l'axe du timon de celle-ci, c'est-à-dire sensiblement perpendiculairement à l'axe défini par le train de roues de la remorque.

Ensuite, la commande de freinage est transmise au niveau des roues de la remorque, notamment par une tringlerie, ou par une transmission hydraulique.

Les attelages avec timon articulé, actuellement connus, ou bien ne comportent pas de commande de freinage par inertie, ou bien comportent une commande de type traditionnel qui se situe à proximité immédiate de la fixation d'attelage de la remorque au véhicule.

L'articulation des bras au niveau du timon d'attelage fait que la fixation du timon d'attelage au véhicule est rigide, au moins dans un plan sensiblement horizontal, ce qui oblige à disposer l'élément de commande de freinage par inertie au niveau de cette fixation, et donc parallèlement à la direction d'avancement du véhicule.

De se fait, l'efficacité de freinage par inertie varie en fonction de l'angle entre la remorque et le véhicule, et diminue au fur et à mesure que cet angle augmente, ce qui naturellement n'est pas souhaitable.

Un des buts de la présente invention est de remédier à cet inconvénient et de proposer un timon d'attelage articulé pour une remorque, pour lequel l'efficacité du freinage est sensiblement constante quel que soit l'angle existant entre la remorque et le véhicule.

D'autres buts et avantages apparaîtrons au cours de la description qui va suivre.

Selon l'invention, le timon articulé d'attelage pour une remorque, notamment mais non exclusivement une caravane, tractée par un véhicule, comprend au moins deux bras articulés d'un côté à un organe transversal solidarisable au véhicule et de l'autre à un organe transversal solidaire de la remorque, les bras et les organes transversaux constituant, lorsque le véhicule et la remorque sont en ligne, au moins un trapèze déformable, dont les deux côtés obliques constitués par les bras se coupent fictivement au voisinage du train arrière du véhicule, et la remorque comprend par ailleurs des moyens de freinage à inertie.

Le timon est caractérisé en ce que chaque bras est pourvu d'un moyen de commande des moyens de freinage par inertie et en ce que le timon comprend en outre des moyens intermédiaires aptes à assurer la transmission de la commande de freinage par inertie et à imposer un mouvement d'amplitude sensiblement identique des moyens de commande des différents bras lors de la sollicitation par inertie d'au moins l'un d'entre eux et ce quel que soit l'angle entre les axes longitudinaux de la remorque et du véhicule.

L'invention sera mieux comprise à l'aide de la description qui va suivre, faite à titre d'exemple non limitatif, en regard du dessin ci-annexé qui représente schématiquement:

figure 1: une vue de dessus d'un timon articulé d'attelage dans une version dite hydraulique,

figure 2a et 2b: une version mécanique de ce timon vu de dessus,

figure 3: à plus grande échelle, une coupe selon III-III de la figure 2,

figure 4: une autre variante de réalisation du timon, figure 5: un détail de réalisation,

figure 6: un autre détail de réalisation.

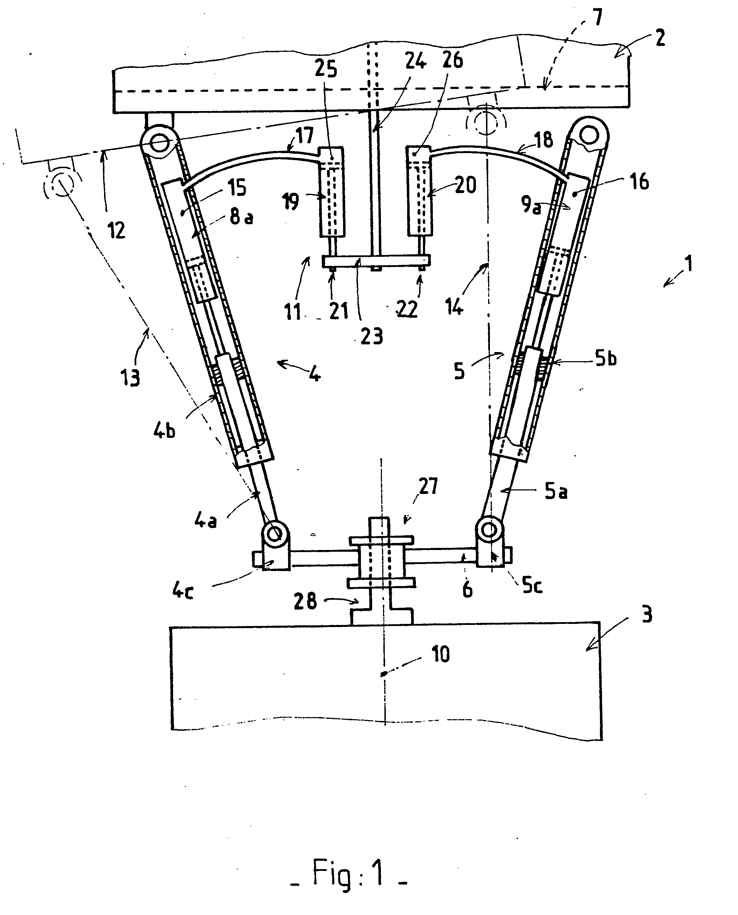

On a représenté dans la figure 1, à titre d'illustration non limitative de l'invention, un timon articulé d'attelage 1 reliant une remorque 2 à un véhicule tracteur 3.

Le timon 1 représenté dans la figure 1 comprend deux bras 4, 5. Les bras 4, 5 sont articulés d'un côté à un organe transversal 6 solidarisable au véhicule 3 et de l'autre à un organe transversal 7 solidaire de la remorque 2 et qui est par exemple constitué par un élément de son chassis.

Les deux bras articulés 4, 5 et les éléments transversaux 6, 7 constituent, lorsque le véhicule et la remorque 2 sont en ligne, un trapèze isocèle déformable, dans un plan sensiblement horizontal défini sensiblement par le chassis de la remorque, dont les côtés obliques que constituent les bras 4, 5 se coupent fictivement au voisinage de l'essieu arrière du véhicule.

D'un manière connue, cette disposition améliore le comportement routier de la caravane et notamment amortit l'amplitude de ses mouvements éventuels de lacets.

De préférence, afin d'adapter le timon 1 à différents types de véhicule, et d'améliorer encore le comportement routier de la remorque 2, des moyens 4c, 5c de réglage de la distance entre les articulations des bras 4, 5 sur l'organe transversal 6 solidarisable au véhicule 2 sont prévus de façon à pouvoir déplacer le point fictif d'articulation de la remorque 2 et, en fonction du véhicule, à l'amener au voisinage de l'essieu arrière.

Le timon d'attelage 1 représenté dans la figure 1 n'est pas limitatif pour l'invention et d'une manière semblable, le timon pourrait être équipé de trois ou quatre bras différents qui ont pour but d'amortir les mouvements de lacets ou de tangage de la remorque 2.

Selon l'invention, chaque bras 4, 5 est pourvu d'un moyen de commande du freinage par inertie de la remorque 2.

Dans une forme préférée de réalisation, pour constituer ce moyen 8, 9, chacun des bras 4, 5 est constitué de deux parties télescopiques 4a et 4b ou 5a et 5b.

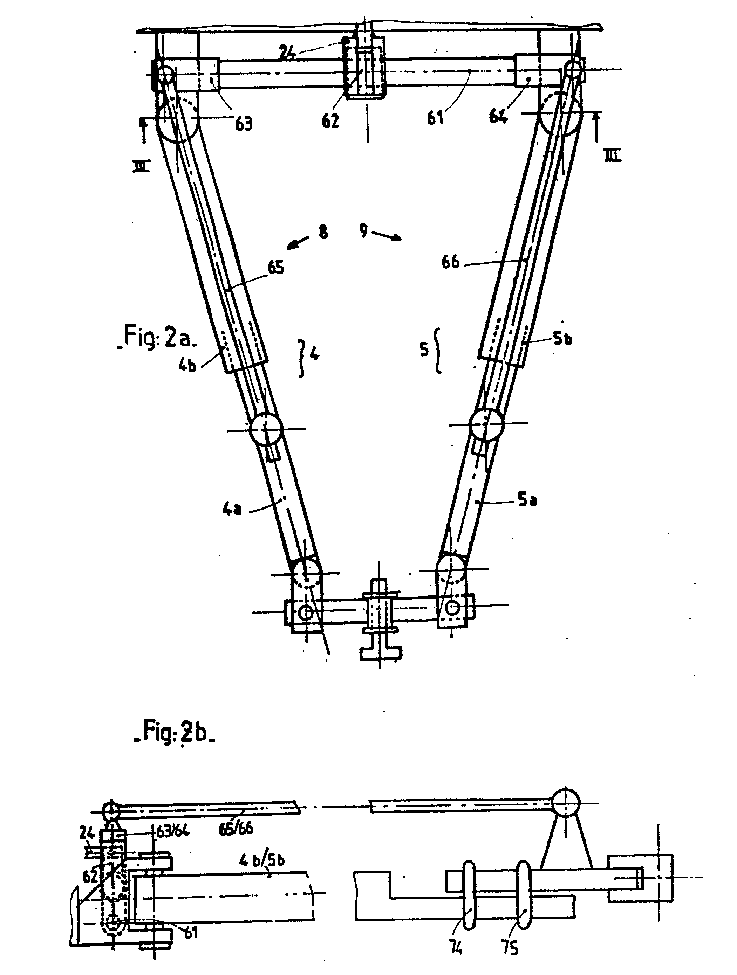

Eventuellement, pour chaque bras 4, 5, une lumière de l'une des parties 4a, 5a coopère avec une goupille solidaire de l'autre partie 4b, 5b qui traverse la dite lumière pour autoriser la rétraction des deux parties 4a et 4b, 5a et 5b en empêchant leur rotation relative sur l'axe qu'elles définissent respectivement. Pour constituer le moyen 8, 9 de commande des moyens de freinage par inertie, chaque bras est lui-même constitué de deux parties 4a, 4b ou 5a, 5b coulissant l'une parallèlement à l'autre sous le contrôle d'au moins deux paires de guides 74, 75 tels des brides articulées (figure 2b).

C'est alors la rétraction des bras 4, 5 qui commande le freinage par inertie de la remorque 2.

Le fait que chaque bras 4, 5 comporte son propre système de commande du freinage par inertie, fait que, en cas de ralentissement du véhicule, la force de réaction par inertie de la remorque 2 sur le véhicule 3 se transmet par l'intermédiaire des deux bras de liaison 4, 5 et se répartit au niveau de chacun d'eux.

Cette répartition s'effectue d'elle-même selon l'angle que forme l'axe longitudinal de la remorque 2 avec l'axe longitudinal 10 du véhicule et au niveau de chaque bras, la composante de la force de réaction sollicite les parties télescopiques 4a, 4b ou 5a, 5b à la rétraction, ce qui, par inertie, engendre le frainage de la remorque 2.

Eventuellement, les éléments télescopiques sont pourvus de tout moyen approprié de rappel élastique, par exemple un ressort de compression.

Selon l'invention, la commande de freinage par inertie engendrée par la rétraction des parties télescopiques 4a, 4b ou 5a, 5b est transmise aux organes de freinage de la remorque 2 par des moyens intermédiaires de transmission 11.

Ces moyens intermédiaires de transmission 11 sont de tout type apte à réagir à la rétraction de l'un au moins des bras télescopiques 4, 5 et à obliger l'autre à se rétracter avec une amplitude sensiblement identique.

Ainsi dans l'exemple représenté ci-dessus, quel que soit l'angle que forme l'axe longitudinal de la remorque 2 avec l'axe longitudinal 10 du véhicule 3, sous la sollicitation due à l'inertie d'au moins l'un des bras de la remorque, les bras télescopiques se rétractent de manière sensiblement identique.

Dans la figure 1, on a représenté en traits fins, en 12, la remorque 2 éloignée de son axe longitudinal et en traits mixtes 13, 14 on a schématisé les deux bras de liaison 4, 5 du timon.

Dans cette position, lors d'un ralentissement du véhicule 3, c'est le bras télescopique 5 situé sur l'axe 14 qui serait sans doute le plus sollicité.

Les moyens intermédiaires 11 de commande du freinage par inertie imposent cependant au bras télescopique 4 situé sur l'axe 13 de se rétracter de manière identique.

De ce fait, la force de réaction due à l'inertie de la remorque 2 contre le véhicule 3 se trouve transformée, dans sa plus grande partie, en force de rétraction des bras télescopiques 4, 5 et ceux-ci assurent l'efficacité sensiblement constante du freinage par inertie quel que soit l'angle entre le véhicule et la remorque.

Dans l'exemple représenté, pour chaque bras 4, 5, les parties télescopiques 4a et 4b, 5a et 5b sont respectivement reliées aux deux parties d'un élément télescopique 8a, 9a, tel un vérin qui est orienté dans la direction du bras et qui se rétracte conjointement à la rétraction du bras.

Cette disposition n'est pas limitative, et toute autre disposition appropriée convient, et par exemple, les bras 4, 5 peuvent constituer eux-mêmes les vérins 8a, 9a.

De préférence, les vérins 8a, 9a sont des vérins hydrauliques à simple effet dont les chambres antérieures 15, 16 sont reliées par des canalisations hydrauliques 17, 18 aux moyens intermédiaires 11 de commande.

Ces moyens intermédiaires 11 sont alors quant à eux consitués par ces canalisations et par deux vérins hydrauliques jumelés 19, 20 montés en parallèle, dont les tiges respectives 21 et 22 sont accouplées par exemple par l'intermédiaire d'une bride 23. Cette bride 23 commande une tringlerie 24 dont le mouvement agit sur le dispositif de freinage au niveau de chacune des roues.

De préférence, les axes des vérins jumelés 19, 20 sont sensiblement parallèles à l'axe longitudinal de la remorque 2 et leurs tiges respectives 21, 22 sont dirigées vers l'avant du timon.

En outre, les canalisations 17, 18 relient les chambres arrières 15, 16 des éléments télescopiques 8, 9 aux chambres arrières 25, 26 des vérins jumelés 19, 20 dont les tiges 21, 22 en position de repos sont rentrées.

De cette façon, une rétraction des éléments télescopiques 8, 9 provoquent une sortie des tiges 21, 22 des vérins jumelés 19, 20 et donc un mouvement vers l'avant de la tringlerie 24, qui assure la liaison avec les différents dispositifs de freinage des roues.

Eventuellement, le débit du fluide dans les canalisations 17 et 18 est régulé dans un sens comme dans l'autre par un moyen connu, par exemple, un étrangleur ou un étrangleur et un clapet anti-retour en parallèle.

Ceci est à la portée de l'homme de l'art.

La tringlerie 24 assure une commande mécanique des dispositifs de freinage des roues, ceci n'est pas limitatif, et l'invention s'applique également dans le cas d'une autre commande et notamment une commande hydraulique.

Dans ce cas, les moyens intermédiaires de commande 11 agissent sur un maître-cylindre de freinage indépendant.

Les dispositifs hydrauliques de freinage au niveau de chacune des roues peuvent être également raccordés par des canalisations hydrauliques directement aux chambres avant de chaque vérin jumelé 19, 20 et être commandés directement par leur variation de volume.

Dans ce dernier cas, il est également possible d'inverser les rôles des chambres arrières et des chambres avant des deux vérins jumelés 19, 20.

Dans une variante, les moyens intermédiaires consistent en des leviers.

Par exemple, les bras télescopiques peuvent agir sur des leviers distincts articulés autour d'axes verticaux et dont l'action est synchronisée par une tringle transversale.

Les bras peuvent agir sur des leviers ou manivelles 62, 63 portés par un palonnier guidé en rotation autour d'un axe transversal 61, parmi ces manivelles 62, 63 et 64, une première (62) commandant la tringlerie 24 agissant sur le dispositif de freinage des roues alors qu'au moins une des autres (63, 64) reçoit les sollicitations transmises par le moyen 8 ou 9 qui consiste, quant à lui, en une tringlerie 65, 66 reliée à l'avant du timon.

Les manivelles 63, 64 sont disposées de manière à imposer aux moyens de commande des actions d'amplitude comparable.

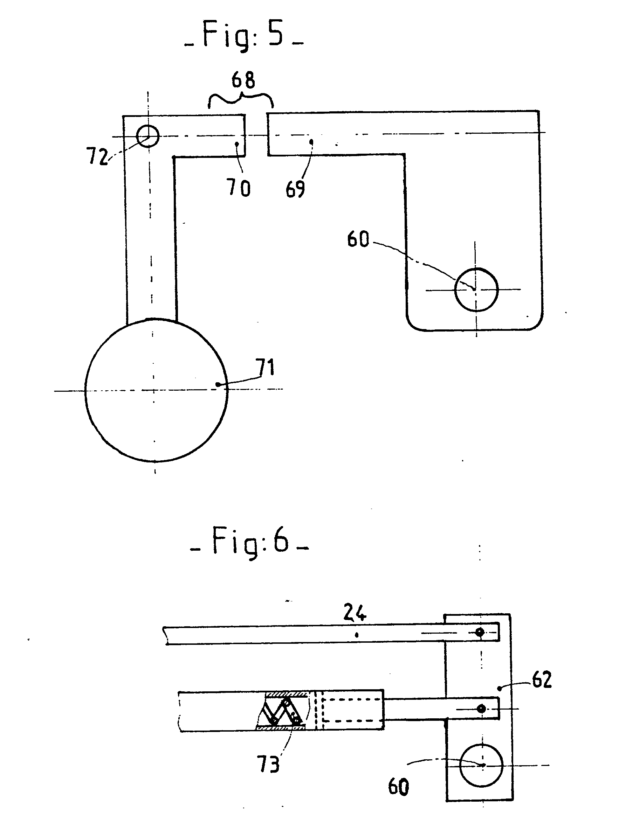

Cette tringlerie peut être constituée par les bras eux-mêmes (figure 4), auquel cas, les extrémités arrières des bras ne sont associées à la remorque que par l'intermédiaire du palonnier 60 et la traverse avant 6 du timon est reliée à la remorque par un timon central télescopique 67.

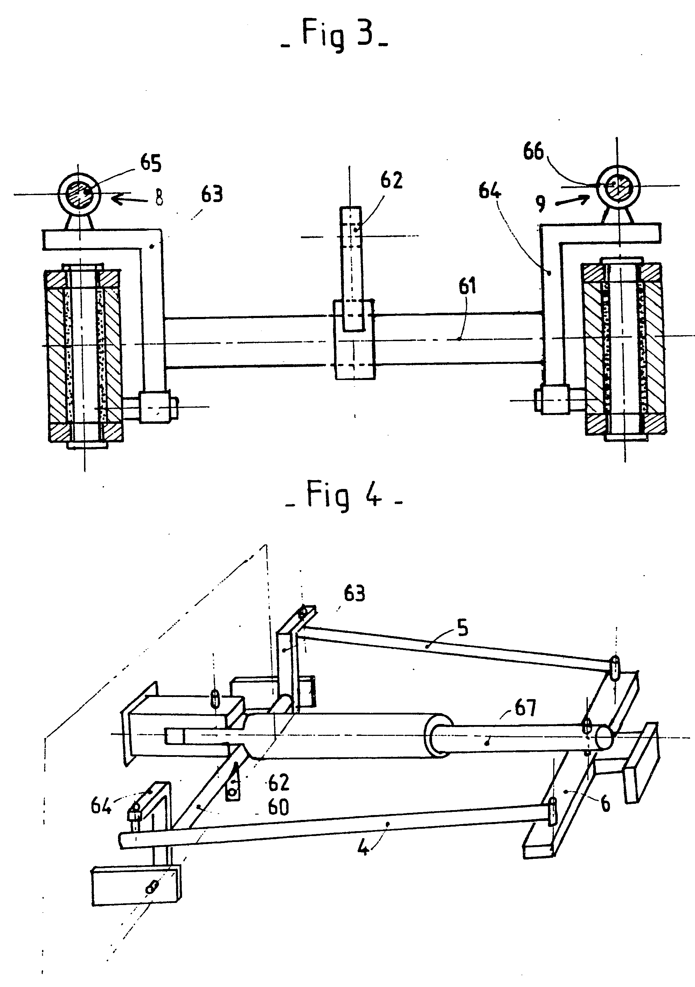

Elle peut également être distincte des bras 4, 5 (figures 2 et 3) qui sont alors télescopiques et peut être reliée à la partie avant 4a ou 5a du bras 4 ou 5 correspondant.

Pour permettre la marche arrière, le timon est également pourvu de moyens 68 de blocage de la transmission du freinage par inertie.

Par exemple (figure 5), ces moyens sont constitués d'une part, d'une butée solidaire du palonnier 60 et orientée vers l'arrière et, d'autre part, d'un poussoir 70 orienté vers l'avant, solidaire d'une masselotte 71 et pivotant autour d'un axe horizontal et transversal 72.

Cette masselotte libère le palonnier lors du freinage et le bloque en marche arrière.

La longueur du poussoir conditionne la sensibilité du système.

Un ressort amortisseur de rappel 73 peut également être prévu pour libérer la commande du freinage et s'opposer au rapprochement de la remorque et du tracteur (figure 6) ou, au contraire, pour réaliser un retro-frein en commandant le freinage et en s'opposant à l'écartement de la remorque et du tracteur.

La course du dispositif de commande du freinage devra être suffisante et bien amortie pour neutraliser les petites variations de tension remorque-tracteur.

Naturellement, la présente description n'est donnée qu'à titre indicatif et l'on pourrait adopter d'autres mises en œuvre de l'invention sans pour autant sortir du cadre de celle-ci.

**Revendications**

1. Timon articulé d'attelage pour une remorque (2), notamment mais non exclusivement une caravane, tractée par un véhicule (3) comprenant:
— d'une part, au moins deux bras (4, 5) articulés d'un côté à un organe transversal (6) solidarisable au véhicule et de l'autre à un organe transversal (7) solidaire de la remorque, les bras (4, 5) et les organes (6, 7) constituant lorsque le véhicule et la remorque sont en ligne, un trapèze isocèle déformable au moins dans un plan horizontal dont les deux côtés obliques constitués par les deux bras (4, 5) se coupent fictivement au voisinage du train arrière du véhicule, et
— d'autre part, des moyens de freinage à inertie, ce timon étant caractérisé en ce que chaque bras (4, 5) est pourvu d'un moyen (8, 9) de commande des moyens de freinage par inertie et en ce que le timon comprend en outre des moyens intermédiaires (11) aptes à assurer la tranmission de la commande de freinage par inertie et à imposer un mouvement d'amplitude sensiblement identique des moyens de commande (8, 9) des différents bras (4, 5) lors de la sollicitation par inertie d'au moins l'un d'entre eux et ce, quel que soit l'angle entre les axes longitudinaux de la remorque (2) et du véhicule (3).

2. Timon selon la revendication 1, caractérisé par le fait que, pour constituer le moyen (8, 9) de commande des moyens de freinage par inertie, chaque bras est lui-même constitué de deux parties télescopiques (4a et 4b ou 5a et 5b) dirigées selon l'axe du dit bras (4 ou 5).

3. Timon selon la revendication 1, caractérisé en ce que, pour constituer le moyen (8, 9) de commande des moyens de freinage par inertie, chaque bras est lui-même constitué de deux parties (4a, 4b ou 5a, 5b) coulissant l'une parallèlement à l'autre sous le contrôle d'au moins deux paires de guides tels des brides articulées.

4. Timon selon la revendication 2, caractérisé:
— en ce qu'aux parties télescopiques (4a et 4b ou 5a et 5b) des bras (4, 5) sont reliés des vérins hydrauliques (8a, 9a),
— en ce que les moyens intermédiaires (11) comprennent au moins deux verins hydrauliques (19, 20) qui sont jumelés et dont les tiges sont couplées entre elles, et
— en ce que chaque vérin hydraulique (8a, 9a) des bras (4, 5) est relié à un vérin différent (19, 20) des moyens intermédiaires (11) par l'intermédiaire d'une canalisation hydraulique (17, 18).

5. Timon selon la revendication 4, caractérisé par le fait que les canalisations hydrauliques (17, 18) raccordent respectivement la chambre arrière d'un vérin (8a, 9a) d'un bras (4, 5) à la chambre arrière (25, 26) d'un vérin (19, 20) des moyens intermédiaires (11).

6. Timon selon l'une quelconque des revendications 1 à 6 caractérisé par le fait que les bras (4, 5) sont associés à l'organe transversal (6) par des moyens (4c, 5c) de réglage de la distance entre les points d'articulation des bras (4, 5).

7. Timon selon la revendication 1, caractérisé en ce que les moyens intermédiaires consistent en un palonnier guidé en rotation autour d'un axe transversal (61) et portant des manivelles (62, 63 et 64), une première (62) commandant la tringlerie (24) agissant sur le dispositif de freinage des roues alors qu'au moins une des autres (63, 64) reçoit les sollicitations transmises par le moyen (8 ou 9) qui consiste, quant à lui, en une tringlerie (65, 66) reliée à l'avant du timon.

8. Timon selon la revendication 7, caractérisé en ce que la tringlerie est constituée par les bras eux-mêmes et en ce que, de ce fait, les extrémités arrières des bras ne sont associées à la remorque que par l'intermédiaire du palonnier (60) et la traverse avant (6) du timon est reliée à la remorque par un timon central télescopique (67).

9. Timon selon la revendication 7, caractérisé en ce que la tringlerie est distincte des bras (4, 5) qui sont alors télescopiques et est reliée à la partie avant (4a ou 5a) du bras (4 ou 5) correspondant.

10. Timon selon l'une quelconque des revendications 1 à 9, caractérisé en ce que, pour permettre la marche arrière, il est pourvu de moyens (68) de blocage de la transmission du freinage par inertie.

**Patentansprüche**

1. Drehbare Anhängerdeichsel zum Anhängen eines von einem Fahrzeug (3) gezogenen Anhängers (2), insbesondere, aber nicht ausschliesslich, eines Caravans, enthaltend:
— einerseits mindestens zwei Arme (4, 5), die drehbar auf einer Seite an einem Querteil (6), das am Fahrzeug befestigbar ist, und auf der anderen Seite an einem fest mit dem Anhänger verbundenen Querteil (7) befestigt sind, wobei die Arme (4, 5) und die Teile (6, 7), wenn das Fahrzeug und der Anhänger sich in einer Linie befinden, ein gleichseitiges Trapez bilden, das mindestens in einer horizontalen Ebene deformierbar ist, dessen beide Schrägseiten durch die beiden Arme (4, 5) gebildet werden, die sich fiktiv in der Nachbarschaft des rückwärtigem Teils des Fahrzeugs treffen, und
— andererseits eine Auflaufbrems-Vorrichtung, dadurch gekennzeichnet, dass jeder Arm (4, 5) mit einer Steuervorrichtung (8, 9) für die Auflaufbremse versehen ist und dass die Deichsel ausserdem Zwischeneinrichtungen enthält, die die Übertragung der Steuerung der Auflaufbremse gewährleisten und während der Trägheitsbetätigung den verschiedenen Armen (4, 5) eine empfindliche Amplituden-Bewegung, die identisch ist mit den Steuervorrichtungen (8, 9), übertragen, und zwar mindestens einem von ihnen und entsprechend dem Winkel zwischen den Längsachsen des Anhängers (2) und des Fahrzeugs (3).

2. Deichsel nach Anspruch 1, dadurch gekennzeichnet, dass die Steuervorrichtung (8, 9) für die Auflaufbremse so ausgebildet ist, dass jeder Arm aus zwei Teleskopteilen (4a und 4b oder 5a und 5b) besteht, die entsprechend der Achse des entsprechenden Arms (4 oder 5) gerichtet sind.

3. Deichsel nach Anspruch 1, dadurch gekennzeichnet, dass die Steuervorrichtung (8, 9) für die Auflaufbremse so ausgebildet ist, dass jeder Arm aus zwei Teilen (4a, 4b oder 5a, 5b) besteht, die parallel nebeneinander unter Steuerung von mindestens zwei Paaren von Führungen, wie drehbaren Flanschen, gleiten.

4. Deichsel nach Anspruch 2, dadurch gekennzeichnet,
— dass die Zwischenvorrichtungen (11) mindestens zwei hydraulische Zylinder (19, 20) enthalten, die sich entsprechen und deren Gestänge untereinander verbunden sind, und
— dass jeder hydraulische Zylinder (8a, 9a) der Arme (4, 5) über eine hydraulische Leitung (17, 18) mit einem unterschiedlichen Zylinder (19, 20) der Zwischenvorrichtung (11) verbunden ist.

5. Deichsel nach Anspruch 4, dadurch gekennzeichnet, dass die hydraulischen Leitungen (17, 18) jeweils die rückwärtigen Kammern eines Zylinders (8a, 9a) eines Armes (4, 5) mit der rückwärtigen Kammer (25, 26) eines Zylinders (19, 20) der Zwischenvorrichtung (11) verbinden.

6. Deichsel nach irgendeinem der Ansprüche 1 bis 6, dadurch gekennzeichnet, dass die Arme (4, 5) mit einem Querteil (6) über Vorrichtungen (4c, 5c) verbunden sind, die die Distanz zwischen den Gelenkpunkten der Arme (4, 5) regulieren.

7. Deichsel nach Anspruch 1, dadurch gekennzeichnet, dass die Zwischenvorrichtung aus einem Steuerhebel besteht, der drehbar um eine Querachse (61) geführt ist und der Hebel (62, 63 und 64) trägt, von denen ein erster (62) das Gestänge (24) über die Vorrichtung zur Bremsung der Räder betätigt, und mindestens einer der anderen (63, 64) die Kräfte aufnimmt, die von der Steuervorrichtung (8 oder 9) übertragen werden, die aus einem Gestänge (65, 66) besteht, die vorn an der Deichsel befestigt ist.

8. Deichsel nach Anspruch 7, dadurch gekennzeichnet, dass das Gestänge durch die Arme selbst gebildet wird und dass dadurch die hinteren Enden der Arme mit dem Anhänger nur über den Steuerhebel (60) verbunden ist und dass das vordere Querteil (6) der Deichsel mit dem Anhänger über eine zentrale Teleskop-Deichsel (67) verbunden ist.

9. Deichsel nach Anspruch 7, dadurch gekennzeichnet, dass das Gestänge von den Armen (4, 5), die teleskopisch sind, getrennt ist, und mit dem Vorderteil (4a oder 5a) der entsprechenden Arme (4 oder 5) verbunden ist.

10. Deichsel nach irgendeinem der Ansprüche 1 bis 9, dadurch gekennzeichnet, dass zum Ermöglichen der Rückwärtsfahrt eine Vorrichtung (68) zum Blockieren der Auflaufbremse vorgesehen ist.

**Claims**

1. Articulated tow bar for a trailer (2), notably but not exclusively a caravan, drawn by a vehicle (3), comprising:
— on the one hand, at least two arms (4, 5) articulated on one side on a transverse member (6) which is integratable with the vehicle, and on the other side on a transverse member (7) which is integral with the trailer, the arms (4, 5) and the members (6, 7) constituting, when the vehicle and the trailer are in line, an isosceles trapezium which is deformable at least in a horizontal plane and whose two oblique sides, constituted by the two arms (4, 5), intersect imaginarily in the vicinity of the rear set of wheels of the vehicle, and

— on the other hand, inertia braking means, said tow bar being characterised in that each arm (4, 5) is provided with a means (8, 9) for controlling the inertia braking means, and in that the tow bar furthermore comprises intermediate means (11) adapted to ensure the transmission of the inertia braking control and to impose a movement of amplitude substantially identical to the control means (8, 9) of the different arms (4, 5) during inertia stress of at least one of them, and in that this is the case no matter what may be the angle between the longitudinal axes of the trailer (2) and of the vehicle (3).

2. Tow bar according to claim 1, characterised in that for constituting the means (8, 9) for controlling the inertia braking means, each arm is itself constituted by two telescopic parts (4a and 4b or 5a and 5b), directed along the axis of the said arm (4 or 5).

3. Tow bar according to claim 1, characterised in that, for constituting the means (8, 9) for controlling the inertia braking means, each arm is itself constituted by two parts (4a, 4b or 5a, 5b) sliding parallel to one another under the control of at least two pairs of guides such as articulated flanges.

4. Tow bar according to claim 2, characterised:

— in that hydraulic jacks (8a, 9a) are connected to the telescopic parts (4a and 4b or 5a and 5b) of the arms (4, 5),

— in that the intermediate means (11) comprise at least two hydraulic jacks (19, 20) which are twinned and whose shanks are coupled to one another, and

— in that each hydraulic jack (8a, 9a) of the arms (4, 5) is connected to a different jack (19, 20) of the intermediate means (11), via the intermediary of a hydraulic conduit (17, 18).

5. Tow bar according to claim 4, characterised by the fact that the hydraulic conduits (17, 18) respectively connect the rear chamber of a jack (8a, 9a) of an arm (4, 5) to the rear chamber (25, 26) of a jack (19, 20) of the intermediate means (11).

6. Tow bar according to any one of the claims 1 to 6, characterised by the fact that the arms (4, 5) are associated with the transverse member (6) by means (4c, 5c) for controlling the distance between the articulation points of the arms (4, 5).

7. Tow bar according to claim 1, characterised in that the intermediate means consist of a control bar which is guided rotatingly about a transverse axis (61) and which carries cranks (62, 63 and 64) a first crank (62) controlling the rod assembly (24) which acts on the braking device for the wheels, whilst at least one of the others (63, 64) receives the stresses transmitted by the means (8 or 9) which in itself consists of a rod assembly (65, 66) connected at the front of the tow bar.

8. Tow bar according to claim 7, characterised in that the rod assembly is constituted by the arms themselves and in that, in consequence of this fact, the rear extremities of the arms are only associated with the trailer via the intermediary of the control bar (60), and the front transverse member (6) of the tow bar is connected to the trailer by a central telescopic tow bar (67).

9. Tow bar according to claim 7, characterised in that the rod assembly is distinct from the arms (4, 5), which are therefore telescopic, and is connected to the front part (4a or 5a) of the corresponding arm (4 or 5).

10. Tow bar according to any one of the claims 1 to 9, characterised in that in order to enable travel in the rearwards direction, it is provided with means (68) for blocking the transmission of the inertia braking.

_ Fig : 1 _

Fig: 2a.

Fig: 2b.

_ Fig 3 _

_ Fig 4 _

_Fig: 5_

68

72 70 69

60

71

_Fig: 6_

24

62

73

60